# EUROPÄISCHE PATENTSCHRIFT

(11) **EP 0 349 905 B1**
(45) Veröffentlichungstag und Bekanntmachung des Hinweises auf die Patenterteilung: **24.08.1994**
(21) Anmeldenummer: 89111874.7
(22) Anmeldetag: 29.06.1989
(51) Int. Cl.: G06F 13/374, G06F 13/26

(54) **Schaltungsanordnung zur Prioritätsauswahl**
Priority selection device
Dispositif de sélection de priorité

(30) Priorität: 07.07.1988 DE 3823059
(43) Veröffentlichungstag der Anmeldung: 10.01.1990
(73) Patentinhaber: SIEMENS AKTIENGESELLSCHAFT, 80333 München (DE)
(72) Erfinder: Fleck, Rod, D-8000 München 40 (DE); Mattheis, Karl-Heinz, D-8011 Forstinning (DE); Poret, Mark, Mesa Arizona 85 202 (US)

(56) Entgegenhaltungen:
- WO-A-82/01430
- FR-A- 2 316 659
- GB-A- 2 074 764
- US-A- 4 040 028
- US-A- 4 334 288

## Beschreibung

Die Erfindung betrifft eine Schaltungsanordnung zur Prioritätsauswahl bei einer integrierten Schaltung mit einer zentralen Recheneinheit und mehreren Interrupt-Quellen, welche an die zentrale Recheneinheit Unterbrechungsanforderungen unterschiedlicher Priorität stellen.

Bei den allerersten Computersystemen war keine Unterbrechung des gerade ablaufenden Programmes möglich. Um von externen Einheiten einen Zugriff auf die zentrale Recheneinheit zu ermöglichen, mußte diese alle Geräte in bestimmten Zeitintervallen abfragen, ob eine Bedienungsanforderung an die Recheneinheit vorlag. Während dieser Abfrageperioden konnte die Recheneinheit keine andere Aufgabe ausführen.

Die nächste Computergeneration war bereits so ausgelegt, daß die zentrale Recheneinheit über eine Unterbrechungsleitung unterbrochen werden konnte, wenn eine Bedienungsanforderung einer peripheren Quelle vorlag. Die Recheneinheit mußte daraufhin alle Quellen abfragen, um die Quelle mit der Unterbrechungsanforderung zu bestimmen.

Spätere Computersysteme verfügten über mehrere Unterbrechungs-Anforderungsleitungen oder über zentrale Interruptbausteine. Diese sogenannten zentralen Interrupt-Controller erzeugten dabei einen Vektor, mittels dessen die unterbrechende Quelle identifiziert werden konnte. Einige Systeme verfügten dabei bereits über Interrupt-Masken, die es ermöglichten, Quellen mit höherer Priorität gegenuber solchen mit niedrigerer zu bevorzugen.

Moderne Microcontroller sind heute mit einer größeren Anzahl auf dem Chip mit integrierter Funktionseinheiten, wie beispielsweise Zähler/Zeitgeber, Analog-Digitalwandler, serielle Schnittstellen oder Capture- und Compare-Einheiten, ausgestattet. Alle diese Einheiten führen parallel zur zentralen Recheneinheit bestimmte, ihnen zugeordnete Funktionen aus, bis eine Bedienung durch die CPU erforderlich ist. Die zentrale Recheneinheit speichert bei derartigen Unterbrechungen den Status des gerade ablaufenden Programms und verzweigt zu einem Unterprogramm, um die entsprechende Quelle zu bedienen.

In modernen Microcontroller-Systemen ist inzwischen die Anzahl der Ereignisse bzw. Aufgaben, die quasi parallel auszuführen sind, drastisch gestiegen. Die Notwendigkeit, immer mehr Unterbrechungsanforderungen gleichzeitig zu bearbeiten, führt zu äußerst komplexen und aufwendigen Systemen zur Verarbeitung von Unterbrechungsanforderungen in Microcontrollern. Hinzu kommt noch daß ein und derselbe Microcontroller-Baustein für eine Vielzahl verschiedener Anwendungsfälle ausgelegt sein muß. Jeder Anwendungsfall verlangt hierbei ein spezielles Spektrum von quasi parallel auszuführenden Aufgaben. Diese Flexibilitätsanforderungen führen beispielsweise dazu, daß auch die Reihenfolge der Bearbeitung gleichzeitig vorliegender Unterbrechungsanforderungen veränderbar sein muß, das heißt, es muß eine Priorisierung der Unterbrechungsanforderungen möglich sein.

Viele Hersteller von Microcontrollern bieten heute sogenannte Microcontroller-Familien an, bei denen zwar die zentrale Recheneinheit identisch ist, die Anzahl und Art der mitintegrierten Peripherieeinheiten jedoch von Baustein zu Baustein variabel ist. Von einer Schaltungsanordnung zur Prioritätsauswahl wird heute erwartet, daß sie alle Eigenheiten der einzelnen Bausteine innerhalb der Familie in möglichst einheitlicher Weise befriedigt.

Die meisten Systeme enthalten heute zentrale Entscheidungsbausteine, welche Unterbrechungsanforderungen mit einer oder auch mehreren Anforderungs- und Rückmeldeleitungen bearbeiten.

Wenn die Zahl der Interrupt-Quellen gering ist, wird dabei allgemein ein Einleitersystem bevorzugt, bei dem die Interrupt-Quelle eine Anforderungsleitung aktiviert, woraufhin die zentrale Recheneinheit das gerade laufende Programm unterbricht und die Quelle der Unterbrechung sucht. Bei diesem Suchvorgang läßt sich auch gleichzeitig die Priorität jeder einzelnen Quelle bestimmen und die Quelle mit der höchsten Priorität auswählen. Falls mehrere Quellen die gleiche Priorität haben, läßt sich durch den Suchablauf bestimmen, welche Quelle bevorzugt wird. Im allgemeinen wird die zentrale Recheneinheit nur solche Anforderungen akzeptieren, deren Priorität höher ist, als die Priorität der gerade ablaufenden Aufgabe.

Eine weniger häufig angewandte Technik sieht für jede Interrupt-Quelle eine eigene Unterbrechungsleitung vor, die mit der zentralen Unterbrechungseinheit verbunden ist. Jede Leitung läßt sich separat freigeben oder sperren, priorisieren und auswerten. Um den hierfür notwendigen Aufwand an Hardware zu reduzieren, ist man bestrebt, die Unterbrechungsanforderungen in Gruppen mit gleicher Priorität einzuteilen. Der Vorteil dieser Priorisierungsmethode liegt darin, daß durch die parallele Auswahlmethode hohe Antwortgeschwindigkeiten erreicht werden. Bei mehreren Unterbrechungsquellen wird jedoch die Flexibilität stark eingeschränkt.

Neben den Schaltungen mit einer zentralen Unterbrechungseinheit sind Unterbrechungssysteme bekannt, sogenannte verteilte Interrupt-Systeme, bei denen jede Interrupt-Quelle über eine eigene Hardware-Schaltung verfügt, mit der es möglich ist, die eigene Priorität mit der der anderen Quellen zu vergleichen. Wenn die Quelle mit der momentan höchsten Priorität bestimmt wurde, kann die zentrale Recheneinheit über eine Rückmeldungsleitung aufgefordert werden, das gerade ablaufende Programm zu unterbrechen.

Der Vorteil dieser Schaltungsvariante liegt darin, daß beliebig viele zusätzliche Interrupt-Quellen implementiert werden können, ohne daß die volle Flexibilität des Systems beeinträchtigt wird. Voraussetzung für dieses dezentrale Unterbrechungssystem ist es, den Schaltungsaufwand in bzw. zwischen den Interrupt-Quellen so gering wie möglich zu halten. Bei einem bekannten System dieser Art sind alle Quellen durch eine gemeinsame Leitung untereinander verbunden. Über ein spezielles Abfrage- und Rückzugsschema testet jede Quelle anhand von Prioritätsbits, die über die gemeinsame Leitung anliegen, ob sie die höchste Priorität besitzt.

Das Abfrageverfahren beginnt jeweils mit dem höchsten Prioritätsbit und springt stufenweise zum niederwertigeren Prioritätsbit. Jede Quelle, die gegenüber einer anderen Quelle eine niederwertigere Priorität besitzt, muß die gemeinsame Leitung frei geben. Am Ende des Abfragemodus verbleibt nur die Quelle mit der momentan höchsten Priorität mit der gemeinsamen Leitung verbunden. Obwohl sich diese Abfrageschaltung durch einen einfachen Aufbau der Verbindungsleitung auszeichnet, ist ihr Einsatz in Microcontroller-Systemen, welche Echtzeitaufgaben lösen müssen, unbefriedigend, da der systembedingte serielle Abfragemodus eine zu lange Antwortzeit benötigt.

Aufgabe der vorliegenden Erfindung ist es, eine Schaltungsanordnung zur Prioritätsauswahl sowie ein Verfahren anzugeben, die sich durch einen einfachen Aufbau und eine kurze Antwortzeit auszeichnen.

Gelöst wird diese Aufgabe bei einer Schaltungsanordnung mit einer zentralen Recheneinheit und N Interrupt-Quellen dadurch, daß jede Interrupt-Quelle über je einen zugeordneten peripheren Interrupt-Knoten und die zentrale Recheneinheit über einen zentralen Interrupt-Knoten an einen gemeinsamen Interrupt-Bus angeschlossen sind.

Der Interrupt-Bus enthält dabei vorteilhaft m Signalleitungen, wobei m der Relation 1 < m ≦ √N genügt.

Eine weitere Lösung der Aufgabe besteht darin, die Signalleitungen des Interrupt-Busses von den Interrupt-Quellen, welche eine Unterbrechungsanforderung an die zentrale Recheneinheit stellen, entsprechend den ihnen zugeordneten Prioritätsnummern zu aktivieren. Dazu werden in einem ersten Auswahlzyklus die dem höherwertigen Teil der Prioritätsnummer (Prioritätswert) entsprechende Signalleitung und alle niederwertigen Signalleitungen aktiviert. Der zentrale Interrupt-Knoten speichert dabei den Prioritätswert der höchstwertig aktivierten Signalleitung. Alle am Auswahlzyklus beteiligten peripheren Interrupt-Knoten vergleichen nun den Zustand auf dem Interrupt-Bus mit dem von ihnen jeweils gesendeten Prioritätswert. Stellt dabei ein Interrupt-Knoten fest, daß sein Prioritätswert jeweils nicht am höchsten war, wird die zugehörige Interrupt-Quelle von der Teilnahme am nächsten Auswahlzyklus ausgeschlossen. In einem weiteren Auswahlzyklus nehmen alle verbliebenen Quellen erneut an der Prioritätsauswahl teil, indem sie wiederum entsprechend dem nächstniederwertigen Teil der Prioritätsnummer die Signalleitungen des Interrupt-Busses aktivieren. Der zentrale Interrupt-Knoten speichert wieder den der höchstwertigen aktivierten Signalleitung entsprechenden Prioritätswert, und die peripheren Interrupt-Knoten schließen alle Quellen, deren Prioritätswert nicht der höchste war, von der Teilnahme am nächsten Auswahlzyklus aus.

Dieses Verfahren wird solange durchgeführt, bis die Interrupt-Quelle mit der höchsten Prioritätsnummer gefunden ist.

Der Interrupt-Knoten, der die Priorisierungsrunde gewonnen hat, sendet nun in einem oder mehreren Zyklen eine Identifikations-Adresse, den Vektor, über den Interrupt-Bus an den zentralen Interrupt-Knoten. Dieser zentrale Interrupt-Knoten entscheidet aufgrund der festgestellten Priorität des gerade ablaufenden Programms in der zentralen Recheneinheit, sowie aufgrund sonstiger Bedingungen (z. B. alle Interrupts gesperrt, Befehlsende, etc.) in der zentralen Recheneinheit, ob die Interrupt-Anforderung bearbeitet werden kann. Falls ja, sendet der zentrale Interrupt-Knoten über den Interrupt-Bus ein Quittungssignal, das den peripheren Interrupt-Knoten, der die Priorisierungsrunde gewonnen hat, dazu veranlaßt, seine Interrupt-Anforderung zu löschen. Gleichzeitig wird die zentrale Recheneinheit dazu veranlaßt, das gerade laufende Programm zu unterbrechen und in die durch den Vektor bestimmte Interrupt-Bearbeitungsroutine zu verzweigen. Wird die betreffende Interrupt-Anforderung vom zentralen Interrupt-Knoten jedoch nicht akzeptiert, weil z. B. das gerade in der zentralen Recheneinheit laufende Programm eine höhere Priorität hat als die Interrupt-Anforderung, bleibt die Anforderung in dem betreffenden peripheren Interrupt-Knoten gesetzt und der Knoten nimmt wieder an der nächsten Priorisierungsrunde teil.

Die Anzahl der möglichen Prioritätsnummern ist durch die Anzahl der Auswahlzyklen und die Anzahl der Signalleitungen im Interrupt-Bus festgelegt. Für N Interrupt-Quellen gilt die Gleichung N ≦ (m+1)ⁿ, wobei m für die Anzahl der Signalleitungen und n für die Anzahl der Auswahlzyklen steht. Für einen Microcontroller mit 256 Interrupt-Quellen bedeutet dies beispielsweise, daß bei einer Anordnung mit vier Signalleitungen spätestens nach vier Auswahlzyklen die Interrupt-Quelle mit der höchsten Prioritätsnummer ermittelt ist.

In den Unteransprüchen sind weitere vorteilhafte Ausgestaltungen und Verfahren der Erfindung beschrieben.

Durch das erfindungsgemäße Verfahren ist es möglich, jede Interrupt-Quelle durch eine einfache Änderung ihres Registerinhaltes auf jede beliebige Priorität zu setzen. Bei der Implementierung zusätzlicher Interrupt-Quellen steigt der Aufwand für die Schaltungsanordnung zur Prioritätsauswahl lediglich linear mit der Anzahl neuer Quellen.

Ein weiterer Vorteil ergibt sich daraus, daß bei der Implementierung weiterer Interrupt-Quellen weder der Interrupt-Bus noch der zentrale Interrupt-Knoten modifiziert werden muß. Darüberhinaus muß die Schaltung der periphären Interrupt-Knoten nicht abgeändert werden; sie läßt sich einfach duplizieren. Der zusätzliche Kostenfaktor für die Implementierung jeder weiteren Interrupt-Quelle ist damit gering.

Da bei dem erfindungsgemäßen Verfahren alle eine Unterbrechung anfordernden Interrupt-Quellen gleichzeitig, d.h. parallel auf ihre Priorität abgefragt werden, ist das Verfahren wesentlich schneller als bei einer rein seriellen Abfragemethode. Darüberhinaus läßt sich die Anzahl der Auswahlzyklen dadurch verringern, daß im Interrupt-Bus entsprechend viele Signalleitungen vorgesehen sind. Dem Konstrukteur ist damit die Möglichkeit gegeben, entweder die Anzahl der Signalleitungen zu reduzieren, indem er mehrere Auswahlzyklen zur Abfrage zuläßt, oder aber den Zeitaufwand für die Prioritätsauswahl zu minimieren, indem er die Zahl der Signalleitungen im Interrupt-Bus erhöht.

Die Erfindung wird nachstehend anhand eines in der Zeichnung dargestellten Ausführungsbeispieles näher erläutert. Dabei zeigt:
- FIG 1: ein Blockschaltbild der gesamten Schaltungsanordnung,
- FIG 2: den Aufbau eines peripheren Interruptknotens,
- FIG 3: ein Schaltbeispiel für eine Busanschluß-Entscheidungseinheit innerhalb eines peripheren Interruptknoten,
- FIG 4: den Aufbau einer zentralen Entladelogik und
- FIG 5: den Aufbau eines zentralen Interruptknotens.

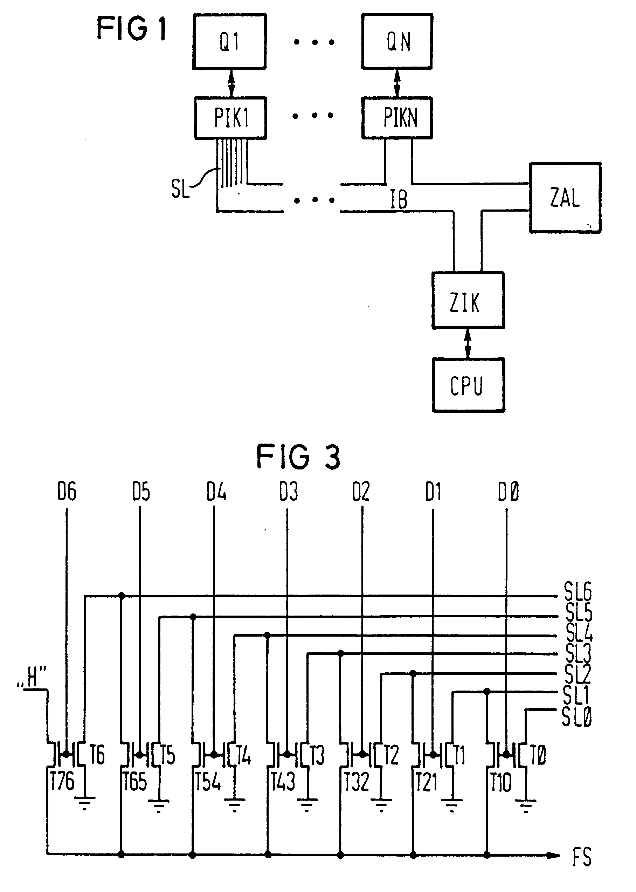

Nach FIG 1 sind N Interrupt-Quellen Q1 bis QN über jeweils einen zugeordneten peripheren Interruptknoten PIK1 bis PIKN an einen gemeinsamen Interruptbus IB, der über m Signalleitungen SL verfügt, angeschlossen. Weiterhin steht der Interruptbus IB mit einer zentralen Aktivierungslogik ZAL und einem zentralen Interruptknoten ZIK, der wiederum Zugriff auf die zentrale Recheneinheit CPU hat, in Verbindung.

Während eines ersten Auswahlzyklusses aktiviert jeder periphere Interruptknoten PIK, dessen zugeordnete Interrupt-Quelle Q eine Unterbrechungsanforderung an die zentrale Recheneinheit CPU stellt, die ihrem Prioritätswert entsprechende Signalleitung SL. Die zentrale Aktivierungslogik ZAL aktiviert daraufhin die höchstwertig aktivierte Signalleitung, sowie alle hierzu niederwertigeren Signalleitungen. Alle peripheren Interrupt-Knoten PIK, die nicht die höchstwertig aktivierte Signalleitung aktiviert haben, schließen sich daraufhin von den nachfolgenden Auswahlzyklen aus. Der zentrale Interruptknoten ZIK speichert den Prioritätswert der höchstwertig aktivierten Signalleitung SL und vereint diesen Prioritätswert mit den Prioritätswerten, die während vorausgegangener Auswahlzyklen gewonnen wurden, zu einer Prioritätsnummer und vergleicht diese mit der Priorität des in der zentralen Recheneinheit CPU gerade ablaufenden Programms. Falls die auf diese Weise ermittelte Prioritätsnummer von der zentralen Recheneinheit CPU akzeptiert wird, kann der periphere Interruptknoten PIK mit der gerade ermittelten höchsten Prioritätsnummer über den Interrupt-Bus IB die Adresse seiner Quelle an die zentrale Recheneinheit CPU übermitteln.

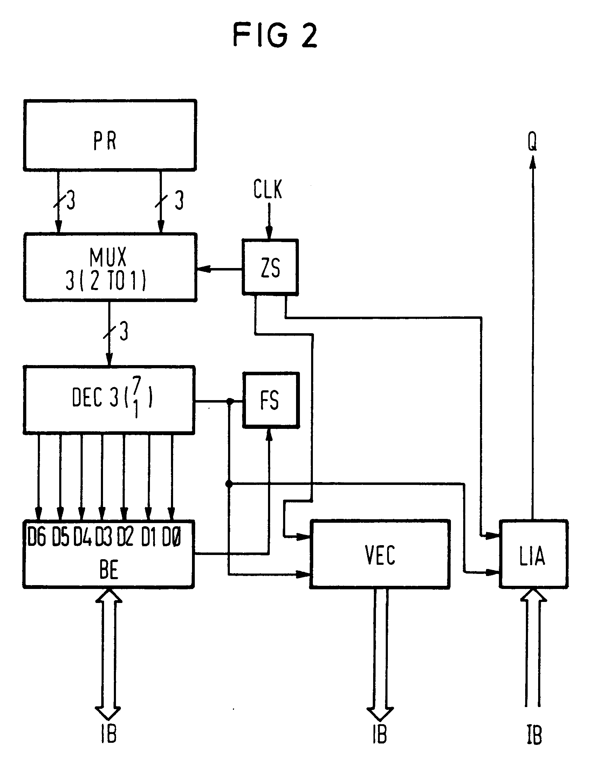

Der in FIG 2 dargestellte periphere Interruptknoten PIK besitzt ein Prioritätsregister PR, in welches die der Interrupt-Quelle Q zugeordnete absolute Prioritätsnummer, die sich beispielsweise aus einer Ebenennummer und einer Gruppennummer zusammensetzt, einschreibbar ist. Über einen Multiplexer MUX und einen Decoder DEC kann ein ausgewählter Teil der Prioritätsnummer (= Prioritätswert) aus dem Prioritätsregister PR an eine Busanschluß-Entscheidungseinheit BE und von dieser an den Interruptbus IB weitergeleitet werden. Über eine Zyklussteuerschaltung ZS wird dem Multiplexer MUX mitgeteilt, welcher Teil der Prioritätsnummer aus dem Prioritätsregister PR an den Decoder zu übertragen ist. Eine Freigabeschaltung FS, die mit der Busanschluß-Entscheidungseinheit BE in Verbindung steht, gibt den Ausgang des Decoders DEC dann frei, wenn die Busanschluß-Entscheidungseinheit BE im vorausgehenden Auswahlzyklus die höchstwertig aktivierte Signalleitung SL aktiviert hatte. Anderenfalls kann der Decoder DEC im gerade ablaufenden Auswahlzyklus keine Signalleitung aktivieren, es sei denn, es wird gerade der erste Auswahlzyklus ausgeführt, an dem noch alle peripheren Interruptknoten PIK teilnehmen können, deren Interrupt-Quellen Q eine Unterbrechungsanforderung abgegeben haben.

Über die Zyklussteuerschaltung ZS und die Freigabeschaltung FS gesteuert, kann der periphere Interrupt-Knoten PIK über eine Busanschluß-Einheit VEC die ihm entweder per Verdrahtung oder über ein Register zugeordnete Vektoradresse auf den Interrupt-Bus IB senden.

Über eine Erkennungsschaltung LIA (Lösche Interrupt-Anforderung), die ebenfalls über die Zyklussteuerung ZS und die Frei gabeschaltung FS aktiviert ist, erkennt der periphere Interrupt-Knoten PIK das Quittungssignal vom zentralen Interrupt-Knoten ZIK und teilt dadurch der zugehörigen Interrupt-Quelle mit, daß die Interrupt-Anforderung akzeptiert wurde, und somit die Anforderung gelöscht werden soll.

Im Ausführungsbeispiel ist ein 3-bit-(2 zu 1)-Multiplexer dargestellt, der aus einem 6-bit Prioritätsregister PR während zweier Auswahlzyklen je 3 bit ausliest und über einen 1 aus 7 Decoder DEC eine von sieben Signalleitungen SL aktiviert.

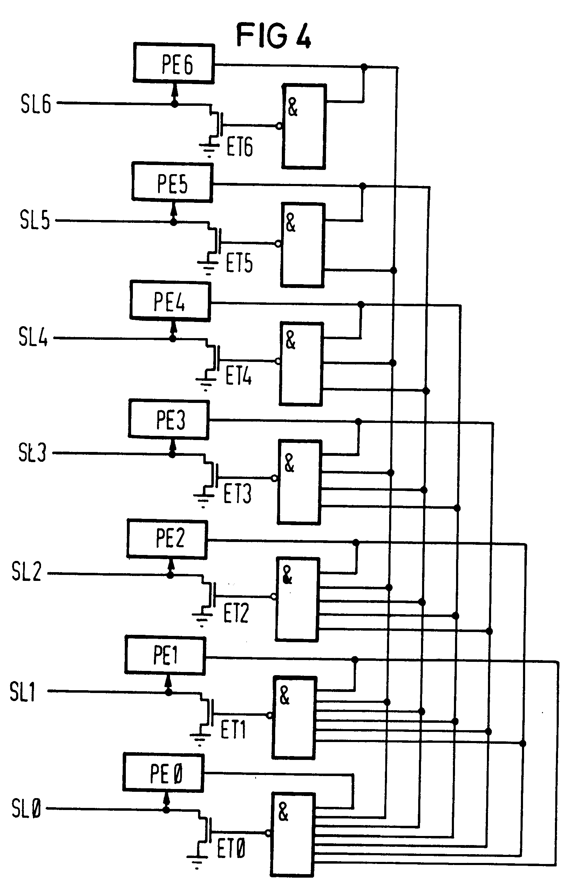

Das in FIG 3 dargestellte Schaltbeispiel für eine Busanschluß-Entscheidungseinheit BE zeigt sieben Eingänge D0 bis D6, sieben Signalleitungen SL0 bis SL6 sowie eine Ausgangsleitung über welcher der Freigabeschaltung FS mitgeteilt wird, ob der periphere Interruptknoten (PIK) im nächsten Auswahlzyklus nochmals teilnehmen darf. Der Interrupt-Bus IB besteht hier aus 7 Leitungen SL0 bis SL6. Am Anfang eines jeden Zyklusses wird der Bus auf High-Zustand vorgeladen. Eine Aktivierung einer Signalleitung bedeutet dann eine Entladung der Leitung auf den Low-Zustand. Jeder Decoderausgang D0 bis D6 steuert einen Transistor T0 bis T6 und einen weiteren Transistor T10 bis T76 derart, daß bei einem Aktivwerden des entsprechenden Decoderausgangs D die zugeordnete Signalleitung SL entladen und die nächste höherwertige Signalleitung SL an die Freigabeschaltung FS angeschaltet wird. Falls diese nächsthöhere Signalleitung SL entladen ist, bedeutet dies, daß dieser periphere Interruptknoten PIK während des nächsten Auswahlzyklusses nicht mehr teilnimmt, da die Prioritätsnummer seiner Interrupt-Quelle Q gegenüber der Prioritätsnummer einer anderen Interruptquelle Q unterlegen ist.

Damit jeder periphere Interruptknoten PIK selbst entscheiden kann, ob er den höchsten Prioritätswert besitzt, müssen alle gegenüber der höchsten aktivierten Signalleitung auf dem Bus niederwertigeren Signalleitungen aktiviert werden. Dies kann entweder durch eine geeignete Wahl des Decoders DEC, oder, wie im Ausführungsbeispiel, durch die zentrale Aktivierungslogik vor genommen werden.

Gemäß FIG 4 besteht diese zentrale Aktivierungslogik ZAL aus sieben Pegelerkennungsschaltungen PE0 bis PE6, die ihre zugeordneten und diesbezüglich niederwertigeren Signalleitungen über NAND-Gatter und Entladetransistoren ET0 bis ET6 aktivieren. Die Aktivierung der Signalleitung, die der jeweiligen Pegelerkennungsschaltung selbst zugeordnet ist, wird zur Optimierung der Pegelübergangsgeschwindigkeit vorgenommen. Immer dann, wenn während eines Auswahlzyklusses eine der Pegelerkennungsschaltungen PE eine Pegeländerung der ihr zugeordneten Signalleitung SL erkennt, werden diese und alle niederwertigeren Signalleitungen SL über die NAND-Gatter und die Entladetransistoren ET auf Masse gezogen. Mit Hilfe dieser Anordnung wird sichergestellt, daß die Busanschluß-Entscheidungseinheiten BE auch dann korrekt arbeiten, wenn zwei Interrupt-Quellen Q zwei nicht benachbarte Signalleitungen SL des Interrupt-Busses IB aktivieren.

Die Interrupt-Quelle Q mit der höchsten Prioritätsnummer erkennt über ihre Busanschluß-Entscheidungs-Einheit BE, daß sie gewonnen hat und schickt daraufhin ihrerseits einen Vektor über den Interruptbus IB an die zentrale Recheneinheit CPU.

Der zentrale Interruptknoten ZIK hat die Aufgabe, die Prioritätsnummer der Interrupt-Quelle Q, die nach n Auswahlzyklen gewonnen hat, mit der Priorität der zentralen Recheneinheit CPU zu vergleichen und, falls die neue Priorität höher ist, den empfangenen Vektor an die zentrale Recheneinheit zu senden, damit diese eine Verzweigung zur entsprechenden Behandlungsroutine ausführt. Von einem Quittungssignal-Treiber QSTR wird hierzu ein Quittungssignal zum Löschen der Interrupt-Anforderung des Interruptknotens PIK, der die Priorisierungsrunde gewonnen hatte, über den Interrupt-Bus IB gesandt.

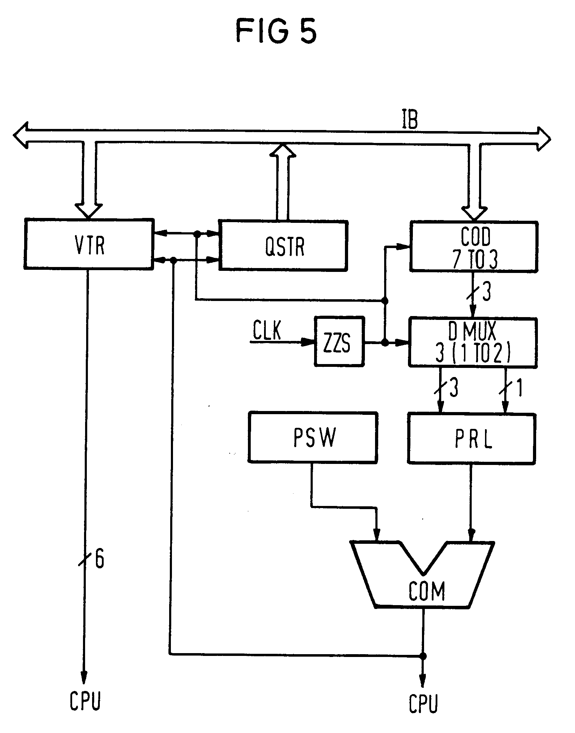

Nach FIG 5 besteht ein zentraler Interruptknoten ZIK beispielsweise aus einem Prioritätscodierer COD, der an den Interrupt-Bus IB angeschlossen ist und die Nummer der Signalleitung SL kodiert an einen Demultiplexer DMUX und ein Prioritäts-Latch PRL weiterleitet. Im Prioritäts-Latch PRL werden die Prioritätswerte der einzelnen Auswahlzyklen sequentiell zur kompletten Prioritätsnummer zusammengefügt. Der Demultiplexer DMUX und das Prioritäts-Latch PRL sind dabei von einer Zyklussteuerschaltung ZZS gesteuert, die ebenso wie die Freigabeschaltung FS der peripheren Interrupt-Knoten PIK vom Systemtakt CLK aktiviert wird. Über einen Komparator COM wird schließlich die im Prioritäts-Latch PRL gespeicherte Prioritätsnummer mit der Prioritätsnummer des in der zentralen Recheneinheit CPU gerade ablaufenden Programms aus dem Prozessor-Status-Wort PSW verglichen.

Falls bei diesem Vergleich festgestellt wird, daß die über den Interrupt-Bus ermittelte Prioritätsnummer größer als die im PSW gespeicherte Nummer ist, wird die vom peripheren Interruptknoten PIK gesandte Vektoradresse an die CPU weitergeleitet, die daraufhin das gerade laufende Programm unterbricht und in die entsprechende Interrupt-Behandlungsroutine verzweigt.

In einem nächsten Zyklus sendet der zentrale Interrupt-Knoten ZIK ein Quittungssignal über den Interrupt-Bus IB, welches den Interrupt-Knoten PIK, der die Priorisierungsrunde gewonnen hat, dazu veranlaßt, die Interrupt-Anforderung bei der angeschlossenen Quelle zu löschen.

In dem hier aufgezeigten Ausführungsbeispiel besteht der Prioritätscodierer COD beispielsweise aus einem 7 zu 3-Codierer, der Demultiplexer DMUX aus einer 3 bit (1 zu 2)-Schaltung. Obwohl die Prioritätsregister der einzelnen peripheren Interruptknoten PIK beispielsweise eine Länge von 6 bit besitzen, kann das Prioritäts-Latch PRL mit einer geringeren Bitbreite, beispielsweise 4 bit, ausgeführt sein. Hierzu wird die absolute Prioritätsnummer einer Interrupt-Quelle aufgeteilt in eine 4-bit Ebenennummer und eine 2-bit Gruppennummer. Die Ebenennummer entscheidet darüber, ob eine Interrupt-Anforderung eine genügend hohe Priorität besitzt, um das laufende Programm zu unterbrechen. Die Gruppennummer dagegen bestimmt bei mehreren Interrupt-Anforderungen der gleichen Ebenennummer nur, welche Anforderung zuerst bedient wird. Daher wird in diesem Beispiel nur die ermittelte 4-bit Prioritätsebenennummer mit der im PSW gespeicherten 4-bit Ebenennummer verglichen.

Über einen Vektor-Treiber VTR gibt der zentrale Interrupt-Knoten ZIK den empfangenen Vektor, im Ausführungsbeispiel eine 6-bit Adresse (jeder der 64 in diesem System möglichen peripheren Interrupt-Knoten hat einen eigenen Vektor), an die CPU weiter. Im folgenden Zyklus wird das Quittungssignal auf den Interrupt-Bus IB gesendet.

Es besteht in diesem vorgestellten System aber auch die Möglichkeit, der CPU selbst einen peripheren Interrupt-Knoten zu geben. Hierzu müßte die im PSW enthaltene Prioritätsnummer um eine Gruppennummer ergänzt werden. Die CPU nimmt dann mit der ihr zugewiesenen Priorität wie jeder andere periphere Interrupt-Knoten PIK an der Priorisierungsrunde teil. Der zentrale Interrupt-Knoten hat dann nur die Aufgabe, den Vektor zu empfangen und an die CPU zu leiten und das Quittungssignal zu generieren. Die CPU akzeptiert den Vektor nur dann, wenn sie während der Priorisierungsrunde feststellt, daß ihre Priorität gegenüber anderen Prioritäten verloren hat. Sie muß dies dem zentralen Interrupt-Knoten mitteilen, damit dieser das Quittungssignal vom Quittungssignal-Treiber QSTR auf den Interrupt-Bus IB freigeben kann.

Mit einem Interrupt-Bus IB, der wie in diesem Beispiel über sieben Signalleitungen SL verfügt, können somit innerhalb zweier Auswahlzyklen entsprechend der Gleichung N = (m+1)ⁿ bis zu 64 Interrupt-Quellen Q abgefragt und die Interrupt-Quelle Q mit der höchsten Prioritätsnummer bestimmt werden.

## Patentansprüche

1. Schaltungsanordnung zur Prioritätsauswahl bei einer integrierten Schaltung mit einer zentralen Recheneinheit (CPU) und N-Interrupt-Quellen (Q1 bis QN), welche an die zentrale Recheneinheit (CPU) Unterbrechungsanforderung stellen,
**dadurch gekennzeichnet**, daß
- jeder Interrupt-Quelle (Q1 bis QN) ein peripherer Interrupt-Knoten (PIK1 bis PIKN) zugeordnet ist,
- jeder periphere Interrupt-Knoten (PIK1 bis PIKN) über einen gemeinsamen Interrupt-Bus (ID) mit einem zentralen Interrupt-Knoten (ZIK) verbunden ist,
- der zentrale Interrupt-Knoten (ZIK) mit der zentralen Recheneinheit (CPU) in Verbindung steht,
- jeder periphere Interrupt-Knoten (PIK1 bis PIKN) ein Prioritätsregister (PR) aufweist, in welchem der zugehörige Prioritätswert gespeichert ist,
- die Prioritätswahl mehrstufig erfolgt,
- jeder periphere Interrupt-Knoten (PIK1 bis PIKN) Mittel enthält, die während jeder Auswahlstufe entsprechend einem Teil des im Prioritätsregister (PR) gespeicherten Prioritätswerts und in Abhängigkeit von Aktivierungssignalen auf dem Interrupt-Bus (IB) einen Teilprioritätswert an den zentralen Interrupt-Knoten (ZIK) übermittelt,
- der zentrale Interrupt-Knoten (ZIK) Mittel zum Speichern des jeweils höchstwertigen Teilprioritätswerts während eines Auswahlzyklusses aufweist,
- Mittel vorgesehen sind, die während der nachfolgenden Auswahlstufe nur diejenigen peripheren Interrupt-Knoten (PIK1 bis PIKN) aktivieren, die im vorhergehenden Aus wahlzyklus mit dem höchstwertigen Teilprioritätswert übereinstimmten,
- der zentrale Interrupt-Knoten (ZIK) über Mittel verfügt, die aus allen während der Auswahlzyklen erhaltenen Teilprioritätswerten einen Prioritätswert bildet.

2. Schaltungsanordnung zur Prioritätsauswahl nach Anspruch 1, **dadurch gekennzeichnet**, daß der Interrupt-Bus (IB) m Signalleitungen (SL) enthält, wobei m der Relation 1 < m ≦ √N genügt.

3. Schaltungsanordnung zur Prioritätsauswahl nach Anspruch 2, **dadurch gekennzeichnet**, daß der Interrupt-Bus (IB) über eine zentrale Aktivierungslogik (ZAL) verfügt, welche die höchstwertig aktivierte Signalleitung (SL) und alle dazu niederwertigeren Signalleitungen (SL) aktiviert.

4. Schaltungsanordnung zur Prioritätsauswahl nach mindestens einem der vorhergehenden Ansprüche, **dadurch gekennzeichnet,** daß die peripheren Interrupt-Knoten (PIK) über Mittel verfügen, den Interrupt-Bus (IB) entsprechend eines Prioritätswertes zu aktivieren.

5. Schaltungsanordnung zur Prioritätsauswahl nach Anspruch 3 oder 4, **dadurch gekennzeichnet**, daß die zentrale Aktivierungslogik (ZAL) für jede der m Signalleitungen (SL) eine eigene Pegelerkennungsschaltung (PE) besitzt, welche im Falle einer Pegeländerung diese und alle niederwertigeren Signalleitungen (SL) entlädt.

6. Schaltungsanordnung zur Prioritätsauswahl nach einem der vorhergehenden Ansprüche, **dadurch gekennzeichnet**, daß der zentrale Interrupt-Knoten (ZIK) über ein Prioritäts-Latch (PRL) zum Zwischenspeichern erkannter Prioritätswerte und über einen Komparator (COM) zum Vergleich der ermittelten Prioritätsnummer mit der Priorität des gerade in der zentralen Recheneinheit (CPU) ablaufenden Programms, verfügt.

7. Verfahren zur Prioritätsauswahl mittels einer Schaltungsanordnung nach Anspruch 1,
**dadurch gekennzeichnet**, daß
- die Prioritätsauswahl mehrstufig erfolgt, während jeder Auswahlstufe jede, eine Unterbrechungsanforderung abgebende Interrupt-Quelle (Q) über ihren zugehörigen peripheren Interrupt-Knoten (PIK) entsprechend einem der Auswahlstufe zugehörigen Teilprioritätswert eine Signalleitung (SL) aktiviert, eine zentrale Aktivierungslogik (ZAL) daraufhin die höchstwertige aktivierte Signalleitung (SL) und alle dazu niederwertigen Signalleitungen (SL) aktiviert, der zentrale Interrupt-Knoten (ZIK) den Prioritätswert der höchstwertigen aktivierten Signalleitung (SL) speichert und gleichzeitig alle am Auswahlzyklus teilnehmenden peripheren Interrupt-Knoten (PIK), die eine gegenüber der höchstwertigen aktivierten Signalleitungen (SL) niederwertigere Signalleitung (SL) aktiviert haben, am nächsten Auswahlzyklus nicht teilnehmen,
- am Ende der Prioritätsauswahl der zentrale Interrupt-Knoten (ZIK) aus den in den einzelnen Auswahlstufen erhaltenen Teilprioritätswerten einen Prioritätswert bildet.

8. Verfahren zur Prioritätsauswahl nach Anspruch 7, **dadurch gekennzeichnet**, daß nach Auffinden der Interrupt-Quelle (Q) mit der höchsten Prioritätsnummer diese Interrupt-Quelle (Q) einen Vektor an die zentrale Recheneinheit (CPU) generiert.

9. Verfahren zur Prioritätsauswahl nach Anspruch 7, **dadurch gekennzeichnet**, daß der zentrale Interrupt-Knoten (ZIK) ein Quittungssignal über den Interrupt-Bus (IB) sendet, wenn eine Unterbrechungsanforderung von der zentralen Recheneinheit (ZPU) akzeptiert wird, woraufhin der periphere Interrupt-Knoten (PIK), der im vorangegangenen Auswahlzyklus die höchste Priorität hatte, die angeschlossene periphere Interrupt-Quelle (Q) dazu veranlaßt, die Unterbrechungsanforderung zu löschen.

## Claims

1. Circuit arrangement for priority selection in an integrated circuit having a central processing unit (CPU) and N interrupt sources (Q1 to QN) which send interrupt requests to the central processing unit (CPU), characterized in that
- a peripheral interrupt node (PIK1 to PIKN) is assigned to each interrupt source (Q1 to QN),
- each peripheral interrupt node (PIK1 to PIKN) is connected to a central interrupt node (ZIK) via a common interrupt bus (IB),
- the central interrupt node (ZIK) is connected to the central processing unit (CPU),
- each peripheral interrupt node (PIK1 to PIKN) has a priority register (PR) in which the associated priority value is stored,
- the priority selection is performed over several stages,
- each peripheral interrupt node (PIK1 to PIKN) contains means which transfer a partial priority value to the central interrupt node (ZIK) during each selection stage in accordance with a part of the priority value stored in the priority register (PR) and depending on activation signals on the interrupt bus (IB),
- the central interrupt node (ZIK) contains means for storing the respective most significant partial priority value during a selection cycle,
- means are provided which, during the following selection stage, activate only the peripheral interrupt nodes (PIK1 to PIKN) which matched the most significant partial priority value during the preceding selection cycle,
- the central interrupt node (ZIK) contains means which form a priority value from all the partial priority values received during the selection cycles.

2. Circuit arrangement for priority selection according to Claim 1, characterized in that the interrupt bus (IB) contains m signal lines (SL), where m satisfies the relation 1 < m ≦ √N^{.}

3. Circuit arrangement for priority selection according to Claim 2, characterized in that the interrupt bus (IB) has a central activation logic (ZAL) which activates the most significant activated signal line (SL) and all the signal lines (SL) having a lower significance.

4. Circuit arrangement for priority selection according to at least one of the preceding claims, characterized in that the peripheral interrupt nodes (PIK) have means which activate the interrupt bus (IB) in accordance with a priority value.

5. Circuit arrangement for priority selection according to Claim 3 or 4, characterized in that the central activation logic (ZAL) has a separate level recognition circuit (PE) for each of the m signal lines (SL), which circuit discharges the latter and all signal lines (SL) having a lower significance if the level changes.

6. Circuit arrangement for priority selection according to one of the preceding claims, characterized in that the central interrupt node (ZIK) has a priority latch (PRL) for temporarily storing recognized priority values and a comparator (COM) for comparing the priority number determined with the priority of the program currently being executed in the central processing unit (CPU).

7. Method for priority selection using a circuit arrangement according to Claim 1, characterized in that
- the priority selection is performed over several stages, during each selection stage each interrupt source (Q) that outputs an interrupt request activates a signal line (SL) via its associated peripheral interrupt node (PIK) in accordance with a partial priority value associated with the selection stage, a central activation logic (ZAL) then activates the most significant activated signal line (SL) and all the signal lines (SL) having a lower significance, the central interrupt node (ZIK) stores the priority value of the most significant activated signal line (SL), and simultaneously all the peripheral interrupt nodes (PIK) participating in the selection cycle which have activated a signal line (SL) having a lower significance than the most significant activated signal lines (SL) do not participate in the next selection cycle,
- at the end of the priority selection the central interrupt node (ZIK) forms a priority value from the partial priority values contained in the individual selection stages.

8. Method for priority selection according to Claim 7, characterized in that after the interrupt source (Q) with the highest priority number has been found, said interrupt source (Q) generates a vector to the central processing unit (CPU).

9. Method for priority selection according to Claim 7, characterized in that the central interrupt node (ZIK) sends an acknowledgement signal via the interrupt bus (IB) when an interrupt request is accepted by the central processing unit (CPU), whereupon the peripheral interrupt node (PIK) that had the highest priority during the preceding selection cycle causes the connected peripheral interrupt source (Q) to clear the interrupt request.

## Revendications

1. Montage pour la sélection de priorité dans le cas d'un circuit intégré ayant une unité (CPU) centrale de traitement et N sources (Q1 à QN) d'interruption, qui adressent une demande d'interruption à l'unité (CPU) centrale de traitement, caractérisé en ce que
- un noeud (PIK1 à PIKN) d'interruption périphérique est associé à chaque source (Q1 à QN) d'interruption,
- chaque noeud (PIK1 à PIKN) d'interruption périphérique est relié par l'intermédiaire d'un bus (ID) d'interruption commun à un noeud (ZIK) d'interruption central,
- le noeud (ZIK) d'interruption central est en liaison avec l'unité (CPU)centrale de traitement,
- chaque noeud (PIK1 à PIKN) d'interruption périphérique comporte un registre (PR) de priorité dans lequel est mémorisée la valeur de priorité correspondante,
- la sélection de priorité s'effectue en plusieurs étapes,
- chaque noeud (PIK1 à PIKN) d'interruption périphérique comprend des moyens qui, pendant chaque étape de sélection, transmettent au noeud (ZIK) d'interruption central une valeur de priorité partielle correspondant à une partie de la valeur de priorité mémorisée dans le registre (PR) de priorité et en fonction de signaux d'activation sur le bus (IB) d'interruption,
- le noeud(ZIK) d'interruption central comporte des moyens pour mémoriser la valeur de priorité partielle chaque fois la plus grande pendant un cycle de sélection,
- des moyens sont prévus pour n'activer, pendant l'étape de sélection suivante, que les noeuds (PIK1 à PIKN) d'interruption périphériques qui correspondaient, dans le cycle de sélection précédent, à la valeur de priorité partielle la plus grande,
- le noeud (ZIK) d'interruption central dispose d'un moyen, qui forme une valeur de priorité à partir de toutes les valeurs de priorité partielles obtenues pendant les cycles de sélection.

2. Montage pour la sélection de priorité selon la revendication 1, caractérisé en ce que le bus (IB) d'interruption comprend m lignes (SL) de signaux, en satisfaisant à la relation 1 < m ≦ √N.

3. Montage pour la sélection de priorité selon la revendication 2, caractérisé en ce que le bus (IB) d'interruption dispose d'une logique (ZAL) centrale d'activation, qui active la ligne (SL) de signaux activée avec la valeur la plus grande et toutes les lignes (SL) de signaux de valeurs inférieures à celle-ci.

4. Montage pour la sélection de priorité selon au moins l'une des revendications précédentes, caractérisé en ce que les noeuds (PIK) d'interruption périphériques disposent de moyens pour activer le bus (IB) d'interruption selon une valeur de priorité.

5. Montage pour la sélection de priorité selon la revendication 3 ou 4, caractérisé en ce que la logique (ZAL) d'activation centrale a pour chacune des m lignes (SL) de signaux un circuit (PE) propre de reconnaissance de niveau qui, dans le cas d'une variation du niveau, décharge cette ligne et toutes les lignes (SL) de signaux de valeurs inférieures.

6. Montage pour la sélection de priorité selon l'une des revendications précédentes, caractérisé en ce que le noeud (ZIK) d'interruption central dispose d'un registre (PRL) de priorité pour la mémorisation temporaire de valeurs de priorité reconnues et d'un comparateur (COM) pour la comparaison du numéro de priorité déterminé à la priorité du programme qui est juste en cours d'exécution dans l'unité (CPU) centrale de traitement.

7. Procédé pour la sélection de priorité au moyen d'un montage selon la revendication 1, caractérisé en ce que :
- la sélection de priorité s'effectue en plusieurs étapes, et, pendant chaque étape de sélection, chaque source (Q) d'interruption émettant une demande d'interruption, active, par l'intermédiaire de son noeud (PIK) d'interruption périphérique associé en fonction d'une valeur de priorité partielle associée à l'étape de sélection, une ligne (SL) de signaux, une logique (ZAL) d'activation centrale, active ensuite la ligne (SL) de signaux activée avec la valeur la plus élevée et toutes les lignes (SL) de signaux de valeurs inférieures à celle-ci, le noeud (ZIK) d'interruption centrale mémorise la valeur de priorité de la ligne (SL) de signaux activée avec la valeur la plus grande et simultanément tous les noeuds (PIK) d'interruption périphériques qui participent au cycle de sélection et qui ont activé une ligne (SL) de signaux ayant une valeur inférieure à celles des lignes (SL) de signaux activées avec des valeurs les plus grandes, ne participent pas au cycle de sélection suivant,
- à la fin de la sélection de priorité, le noeud (ZIK) d'interruption central forme une valeur de priorité à partir des valeurs de priorité partielles obtenues dans les différentes étapes de sélection.

8. Procédé pour la sélection de priorité selon la revendication 7, caractérisé en ce que, après la détermination de la source (Q) d'interruption ayant le numéro de priorité le plus grand, cette source (Q) d'interruption fournit un vecteur à l'unité (CPU) centrale de traitement.

9. Procédé pour la sélection de priorité selon la revendication 7, caractérisé en ce que le noeud (ZIK) d'interruption central envoie un signal d'accusé de réception par le bus (IB) d'interruption, lorsqu'une demande d'interruption est acceptée par l'unité (CPU) centrale de traitement, le noeud (PIK) d'interruption périphérique, qui avait la priorité la plus grande dans le cycle de sélection précédent, amenant ensuite la source (Q) d'interruption périphérique associée, à annuler la demande d'interruption.
